(19) Europäisches Patentamt
European Patent Office
Office européen des brevets

(11) **EP 4 456 238 A1**

(12) **EUROPEAN PATENT APPLICATION**
published in accordance with Art. 153(4) EPC

(43) Date of publication:
**30.10.2024 Bulletin 2024/44**

(21) Application number: **22911940.9**

(22) Date of filing: **21.12.2022**

(51) International Patent Classification (IPC):
**H01M 10/0562** (2010.01)   **H01M 10/052** (2010.01)
**H01B 1/06** (2006.01)   **C01B 25/14** (2006.01)

(52) Cooperative Patent Classification (CPC):
**C01B 25/14; H01B 1/06; H01M 10/052;**
**H01M 10/0562;** Y02E 60/10

(86) International application number:
**PCT/KR2022/020984**

(87) International publication number:
**WO 2023/121307 (29.06.2023 Gazette 2023/26)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **22.12.2021 KR 20210184795**

(71) Applicant: **RESEARCH INSTITUTE OF**
**INDUSTRIAL SCIENCE &**
**TECHNOLOGY**
**Pohang-si, Gyeongsangbuk-do 37673 (KR)**

(72) Inventors:
• **KWON, Ohmin**
**Incheon 22018 (KR)**

• **NAM, Sang Cheol**
**Seoul 02587 (KR)**
• **PARK, Yongsun**
**Incheon 22792 (KR)**
• **KIM, Young Sang**
**Pohang-si, Gyeongsangbuk-do 37655 (KR)**
• **OH, Gwangseok**
**Incheon 22006 (KR)**
• **CHOI, Bokkyu**
**Incheon 21986 (KR)**

(74) Representative: **Maiwald GmbH**
**Elisenhof**
**Elisenstraße 3**
**80335 München (DE)**

(54) **SOLID ELECTROLYTE, METHOD OF MANUFACTURING SAME, AND LITHIUM SECONDARY BATTERY COMPRISING SAME**

(57)   The present invention relates to a solid electrolyte, its manufacturing method, and a lithium secondary battery including the same. In an exemplary embodiment, a solid electrolyte may have some of its halogen elements doped with oxygen.

【FIG. 1】

EP 4 456 238 A1

**Description**

**FIELD OF THE INVENTION**

The present invention is about a battery. More particularly, the present disclosure relates to solid electrolyte, its manufacturing method, and lithium secondary battery including it.

**DESCRIPTION OF THE RELATED ART**

Recently, as the demand for IT mobile devices and small electric power driving apparatus such as electric bicycles and small electric vehicles has rapidly increased, interest in high-capacity batteries is increasing. As demand for the high-capacity battery increases, research on the safety or energy density of the high-capacity battery is actively underway.

Accordingly, research on all-solid batteries is actively underway as a material to improve the safety of existing secondary batteries and increase energy density. An all-solid battery refers to a battery that replaces the liquid electrolyte used in existing lithium secondary batteries with solid. Since flammable solvents are not used in the battery, ignition or explosion due to reactions such as the decomposition reaction of conventional electrolyte solutions does not occur at all. Because of this, the safety of the battery can be improved. Additionally, since lithium metal or lithium alloy can be used as the negative electrode material, the energy density of the battery's mass and volume can be improved.

The solid electrolyte used in the all-solid battery is generally an inorganic solid electrolyte, and various studies are in progress on a sulfide-based solid electrolyte such as $Li_6PS_5Cl$, which has an argyrodite structure among the solid battery. However, the sulfide-based solid electrolyte has a problem that it is difficult to handle in general atmosphere due to reaction with moisture.

**SUMMARY OF THE INVENTION**

The technical object that the present invention aims to solve is to provide an all-solid battery that is easy to handle in the atmosphere.

Another technical object that the present invention aims to solve is to provide a method for manufacturing an all-solid battery with the advantages.

Another technical object that the present invention aims to solve is to provide a lithium secondary battery that includes a all-solid battery with the advantages.

According to an exemplary embodiment, the solid electrolyte may be Argyrodite-type in which some of the halogen element is doped with oxygen. In an exemplary embodiment, the solid electrolyte has the composition $Li_{(xy-x-5y+7)}P_{(1-y)}S_{(xy-x-5y+6)}Cl_{x-xy}O_{4y}$ ($1 \leq x \leq 2$, $0.01 \leq y \leq 0.3$). In an exemplary embodiment, the solid electrolyte may satisfy Equation 1 below.

<Equation 1>

$$3.5 \leq [S]/[P] \leq 4.1$$

(In Equation 1, [S] and [P] mean at% of S and P, respectively)

In an exemplary embodiment, the solid electrolyte has XRD diffraction peak values at $2\theta = 15.5° \pm 0.5°$, $2\theta = 18° \pm 0.5°$, $2\theta = 25.5° \pm 0.5°$, $2\theta = 30.2° \pm 0.5°$, and $2\theta = 32.5° \pm 0.5°$. In an exemplary embodiment, the ion conductivity of a solid electrolyte prior to exposure to air may be greater than 3.1 mS/cm. In an exemplary embodiment, the ion conductivity reduction rate of the solid electrolyte after exposure to air compared to before exposure to air may be less than 35%.

According to another exemplary embodiment, a manufacturing method of a solid electrolyte includes preparing a lithium raw material, a sulfur raw material, a halogen raw material, and a doping raw material; mixing the raw materials; and sintering the resultant obtained by mixing, wherein, the doping raw material includes oxygen. In an exemplary embodiment, the doping raw material may include a phosphoric acid salt-based compound.

In an exemplary embodiment, the phosphoric acid salt-based compound may include at least one selected from the group consisting of $Li_3PO_4$, $Li_4SiO_4$, $Li_4GeO_4$, $Li_3BO_3$, and $Li_3AlO_3$. In an exemplary embodiment, in the step of preparing the raw material, 0.01 to 0.3 mol% of the phosphoric acid salt-based compound may be added, with 100 mol% of the solid electrolyte as a reference.

In an exemplary embodiment, the lithium source material may be $Li_2S$, the sulfur source material may be $P_2S_5$, and the halogen source material may be LiCl. In an exemplary embodiment, the doping raw material may include a phosphoric acid salt-based compound.

In an exemplary embodiment, the solid electrolyte has a composition of $Li_{(xy-x-5y+7)}P_{(1-y)}S_{(xy-x-5y+6)}Cl_{x-xy}O_{4y}$ ($1 \leq x \leq 2$, $0.01 \leq y \leq 0.3$). In an exemplary embodiment, the solid electrolyte may satisfy Equation 1 below.

<Equation 1>

$$3.5 \leq [S]/[P] \leq 4.1$$

(In Equation 1, [S] and [P] mean at% of S and P, respectively)

According to another exemplary embodiment of the present invention, a lithium secondary battery includes a positive electrode comprising a positive active material; a negative electrode comprising a negative active material; and a solid electrolyte positioned between the positive electrode and the negative electrode, wherein, the solid electrolyte is an argyrodite-type in which at least one of the halogens is doped with oxygen. In an exemplary embodiment, the solid electrolyte has a composition of $Li_{(xy-x-5y+7)}P_{(1-y)}S_{(xy-x-5y+6)}Cl_{x-xy}O_{4y}$ ($1 \leq x \leq 2$, $0.01 \leq y \leq 0.3$).

In an exemplary embodiment, the solid electrolyte may satisfy Equation 1 below.

<Equation 1>

$$3.5 \leq [S]/[P] \leq 4.1$$

(In Equation 1, [S] and [P] mean at% of S and P, respectively)

The all-solid battery according to an exemplary embodiment has a composition of $Li_{(xy-x-5y+7)}P_{(1-y)}S_{(xy-x-5y+6)}Cl_{x-xy}O_{4y}$ ($1 \leq x \leq 2$, $0.01 \leq y \leq 0.3$). Because of this, it is stable in the atmosphere and has excellent initial capacity compared to existing sulfide-based solid electrolytes. Therefore, it can provide an all-solid battery with excellent lifespan.

An all-solid battery manufacturing method according to another exemplary embodiment can manufacture an all-solid battery having the above-described advantages.

A lithium secondary battery according to another exemplary embodiment of the present invention can provide a lithium secondary battery including an all-solid battery having the above-mentioned advantages.

## BRIEF DESCRIPTION OF THE DRAWINGS

FIG. 1 is a graph of XRD peak intensity according to various exemplary embodiments of the present invention.
FIG. 2 is a flowchart for the solid electrolyte manufacturing method according to an exemplary embodiment.

## DETAILED DESCRIPTION OF THE EMBODIMENTS

The terms such as first, second, and third are used to describe various portions, components, regions, layers, and/or sections, but various parts, components, regions, layers, and/or sections are not limited to these terms. These terms are only used to distinguish one part, component, region, layer, or section from another part, component, region, layer, or section. Accordingly, a first part, component, region, layer, or section described below may be referred to as a second part, component, region, layer, or section without departing from the scope of the present invention.

Terminologies as used herein are to mention only a specific exemplary embodiment, and are not to limit the present invention. Singular forms used herein include plural forms as long as phrases do not clearly indicate an opposite meaning. The term "including/comprising/containing/having" as used herein concretely indicates specific characteristics, regions, integer numbers, steps, operations, elements, and/or components, and is not to exclude presence or addition of other specific characteristics, regions, integer numbers, steps, operations, elements, and/or components.

When any portion is referred to as being "above" or "on" another portion, any portion may be directly above or on another portion or be above or on another portion with the other portion interposed therebetween. In contrast, when any portion is referred to as being "directly on" another portion, the other portion is not interposed between any portion and another portion.

Unless defined otherwise, all terms including technical terms and scientific terms as used herein have the same meaning as the meaning generally understood by a person of an ordinary skill in the art to which the present invention pertains. Terms defined in a generally used dictionary are additionally interpreted as having the meaning matched to the related art document and the currently disclosed contents and are not interpreted as ideal or formal meaning unless defined.

Additionally, unless specifically stated, % means wt%, and 1ppm is 0.0001wt%.

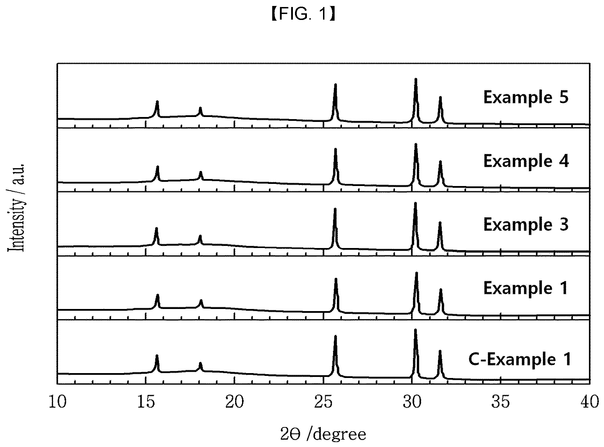

FIG. 1 is a graph of XRD peak intensity according to various exemplary embodiments of the present invention.

Referring to FIG. 1, according to an exemplary embodiment, the solid electrolyte may be Argyrodite-type in which some of the halogen elements are doped with oxygen. The solid electrolyte is not SEI (Solid Electrolyte Interphase), which is a film that occurs at the electrode material interface, such as the initial charge and discharge reaction after battery manufacturing. For example, in battery design, it refers to a solid material with lithium (Li) ion conductivity that can be used as a substitute for electrolyte solution and separator.

The solid electrolyte of the present invention having the composition is a compound containing sulfur and may be a sulfide-based solid electrolyte. Specifically, the Argyrodite-type may have an Argyrodite-type structure containing lithium (Li) element, phosphorus (P) element, sulfur (S) element, and halogen elements such as chlorine (Cl). The solid electrolyte may be particle or powder, and may have crystalline or amorphous properties.

In an exemplary embodiment, the solid electrolyte has a composition of $Li_{(xy-x-5y+7)}P_{(1-y)}S_{(xy-x-5y+6)}Cl_{x-xy}O_{4y}$ ($1 \leq x \leq 2$, $0.01 \leq y \leq 0.3$). By doping some of the halogen elements with oxygen, the solid electrolyte increases moisture stability without deteriorating the ion conductivity and cell performance of the solid electrolyte, and can maintain stability even when exposed to the atmosphere.

In an exemplary embodiment, the solid electrolyte of the present invention satisfies Equation 1 below.

<Equation 1>

$$3.5 \leq [S]/[P] \leq 4.1$$

(In Equation 1, [S] and [P] mean at% of S and P, respectively)

The at% ratio of the sulfur to phosphorus can be 3.5 to 4.1. As the value of Equation 1 satisfies the range, there is an advantage in preventing degradation of the ion conductivity and cell performance of the solid electrolyte.

If the value of Equation 1 is outside the upper limit, there is a problem of conductivity being deteriorated. If the value of Equation 1 exceeds the lower limit, there is a problem of lowering moisture stability.

In an exemplary embodiment, the solid electrolyte may have a peak intensity at a position in an X-ray diffraction pattern measured by an X-ray diffraction device (XRD). Specifically, the solid electrolyte with the composition has an XRD peak value of $2\theta = 15.5\,°\pm 0.5\,°deg$, $2\theta = 18\,°\pm 0.5\,°deg$, $2\theta = 25.5\,°\pm 0.5\,°deg$, in the $2\theta = 30.2\,°\pm 0.5\,°deg$, and $2\theta = 32.5\,°\pm 0.5\,°deg$.

In an exemplary embodiment, the solid electrolyte may be characterized as having no XRD peak values of $2\theta = 17\,°\pm 0.5\,°deg$ and $2\theta = 21.5\,°\pm 3\,°deg$. The XRD peak values of $2\theta = 17\,°\pm 0.5\,°deg$ and $2\theta = 21.5\,°\pm 3\,°deg$ correspond to the impurity peak, and by having the solid electrolyte in which the peaks are not observed, atmospheric stability and electrochemical stability can be improved.

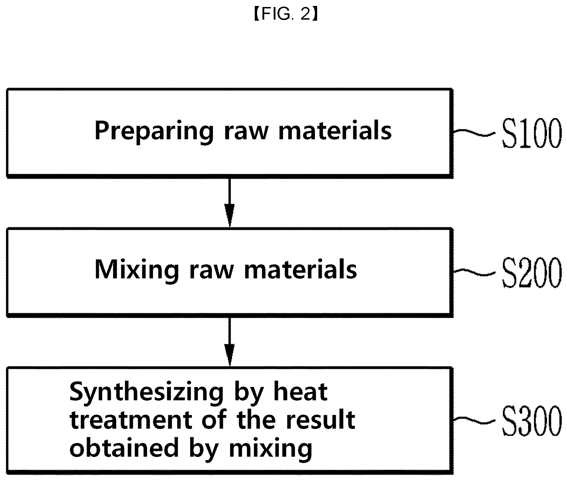

FIG. 2 is a flowchart for the solid electrolyte manufacturing method according to an exemplary embodiment.

Referring to FIG. 2, according to another exemplary embodiment, the Argyrodite-type solid electrolyte manufacturing method includes preparing lithium raw material, sulfur raw material, halogen raw material, and doping raw material (S100), mixing the raw materials (S200), sintering the resultant obtained by mixing (S300).

In an exemplary embodiment, step S100 of preparing lithium raw material, sulfur raw material, halogen raw material, and doping raw material includes, for example, the lithium raw material, $Li_2S$, the sulfur raw material, $P_2S_5$, the halogen raw material, LiCl can be prepared.

In an exemplary embodiment, the doping raw material may be a raw material containing oxygen. For example, the doping raw material may be a phosphoric acid salt-based compound. By using the phosphoric acid salt compound as a doping raw material, it is stable in the atmosphere compared to the existing argyrodite solid electrolyte, and its initial capacity and lifespan can be improved.

In an exemplary embodiment, the phosphoric acid salt-based compound may include at least one selected from the group consisting of $Li_3PO_4$, $Li_4SiO_4$, $Li_4GeO_4$, $Li_3BO_3$, and $Li_3AlO_3$. Specifically, the doping raw material may be $Li_3PO_4$.

In an exemplary embodiment, step S100 of preparing the raw materials may add the phosphoric acid salt-based compound at 0.01 to 0.3 mol%. By adding the amount of the phosphoric acid salt compound within the range, it is possible to contain a sulfide-based solid electrolyte containing a certain ratio of oxygen (O) elements and provide a solid electrolyte with excellent moisture stability.

If the amount of the phosphoric acid salt compound added exceeds the upper limit, there is a problem that an impurity phase is formed or ion conductivity is reduced. If the amount of the phosphoric acid salt compound added exceeds the lower limit, it is difficult to confirm the atmospheric stabilizing effect.

In an exemplary embodiment, the argyrodite-type solid electrolyte has a composition of $Li_{(xy-x-5y+7)}P_{(1-y)}S_{(xy-x-5y+6)}Cl_{x-xy}O_{4y}$ ($1 \leq x \leq 2$, $0.01 \leq y \leq 0.3$).

In the solid electrolyte manufacturing method, step S100 of preparing $Li_2S$, $P_2S_5$, LiCl, and $Li_3PO_4$ raw materials can be controlled to correspond to the composition of $Li_{(xy-x-5y+7)}P_{(1-y)}S_{(xy-x-5y+6)}Cl_{x-xy}O_{4y}$ ($1 \leq x \leq 2$, $0.01 \leq y \leq 0.3$).

The step of mixing the raw materials S200 can be mixed through mechanical mixing or chemical mixing. For example, the mechanical mixing may utilize methods such as paint shakers, ball mills, bead mills, homogenizers, hammer mills, and planetary mills, and the chemical mixing may utilize methods such as fusion quenching. Specifically, in step S200 of mixing the raw material, the raw material may be mixed by a planetary mill.

Step S300, which synthesizes the result obtained by mixing by heat treating it, is a sintering process, which is a step of applying heat to the mixed result. In an exemplary embodiment, step S300 of synthesizing the result obtained by mixing by heat treatment may be performed, if necessary, after performing additional processes such as drying, stirring, cleaning, sizing, and classification.

In an exemplary embodiment, the heat treatment may be performed in an inert atmosphere. The inert atmosphere may be, by way of non-limiting example, $H_2$, He, or Ar atmosphere. Specifically, the inert atmosphere may be Ar atmosphere.

In an exemplary embodiment, the heat treatment may be performed at temperatures above 300 °C. Specifically, the heat treatment may be performed in a temperature range of 300 to 800 °C, specifically 350 to 700 °C, and more specifically 400 to 600 °C. If the heat treatment is lower than the temperature, there is a problem in that the solid-phase reaction and crystallization reaction are not performed smoothly.

In this way, the solid electrolyte prepared through the above-described steps has a composition of $Li_{(xy-x-5y+7)}P_{(1-y)}S_{(xy-x-5y+6)}Cl_{x-xy}O_{4y}$ ($1 \leq x \leq 2$, $0.01 \leq y \leq 0.3$), the solid electrolyte has excellent atmospheric stability, and initial capacity and lifespan can be improved. A detailed description of the synthesized result, the solid electrolyte is same as FIG. 1, given in the above-mentioned in a non-contradictory range

According to another exemplary embodiment of the present invention, a lithium secondary battery may include a positive electrode containing a positive active material, a negative electrode containing a negative active material, and a solid electrolyte positioned between the positive electrode and the negative electrode. The solid electrolyte is described in the above-mentioned FIG. 1, and the solid electrolyte is the same as described in the above-mentioned FIG. 1, in the range that does not contradict.

The positive active material is any one of the group consisting of $LiCoO_2$, $LiNiO_2$, $LiNi_xMn_yO_2$, $Li_{1+z}Ni_xMn_yCo_{1-x-y}O_2$, $LiNi_xCo_yAl_zO_2$, $LiV_2O_5$, $LiTiS_2$, $LiMoS_2$, $LiMnO_2$, $LiCrO_2$, $LiMn_2O_4$, $LiFeO_2$, $LiFePO_4$, and combinations thereof, and the x is 0.3 to 0.8, the y is 0.1 to 0.45, and the z can be independently 0 to 0.2. The positive active material may be more specifically $LiFePO_4$, $LiCoO_2$, NCM811, and NCM622.

The negative electrode consists of natural graphite, artificial graphite (mesophase carbon micro beads), thermal decomposition carbon (pyrolytic carbon), liquid crystal pitch carbon fiber (Mesophase pitch based carbon fiber), liquid crystal pitch (mesophase pitches), a carbonaceous material such as petroleum or coal tar pitch derived coke. Alternatively, it may be a metal such as lithium-containing titanium composite oxide (LTO), Si, Sn, Li, Zn, Mg, Cd, Ce, Ni, or Fe. Or, it may be an alloy composed of the metal. Alternatively, it may be a metal oxide (MeOx). Alternatively, it may be a metal and a carbon composite type. Alternatively, it may be a combination of the mentioned substances. Specifically, the negative electrode may be natural graphite particulate, synthesis graphite particulate, Sn particulate, $Li_4Ti_5O_{12}$ particulate, Si particulate, Si-C composite particulate, and combinations thereof. More specifically, the negative electrode may be natural graphite, artificial graphite, silicon, and combinations thereof.

In this way, the lithium secondary battery containing the solid electrolyte of the present invention maintains stability in the atmosphere and can improve initial capacity and lifespan.

Below, a specific exemplary embodiment of the present invention is described. However, the exemplary embodiment below is only a specific exemplary embodiment of the present invention and the present invention is not limited to the exemplary embodiment below.

### Comparative Example 1 - Preparation of $Li_6PS_5Cl$

$Li_6PS_5Cl$, a common argyrodite-type solid electrolyte, was prepared.

### Comparative Example 2 - Preparation of $Li_{5.5}PS_{4.5}Cl_{1.5}$

$Li_{5.5}PS_{4.5}Cl_{1.5}$ is synthesized through dry milling. The dry milling method involves mixing $Li_2S$, $P_2S_5$, and LiCl at 300 rpm for 8 hours using a planetary mill, then producing a pellet at 300 MPa and synthesizing it through heat treatment at 550 °C in an argon (Ar) atmosphere.

## Exemplary embodiment 1 - Preparation of $Li_{5.465}P_{0.99}S_{4.465}Cl_{1.485}O_{0.04}$

It is quantified $Li_2S$, $P_2S_5$, LiCl, $Li_2PO_4$ in solid electrolyte of $Li_{(xy-x-5y+7)}P_{(1-y)}S_{(xy-x-5y+6)}Cl_{x-xy}O_{4y}$ by applying x=1.5, y=0.01. After adding 0.01 mol% of $Li_3PO_4$, it was mixed at 300 rpm for about 8 hours using a planetary mill. Afterwards, a pellet was produced at 300 MPa and synthesized through heat treatment at 550 °C in an argon (Ar) atmosphere.

## Exemplary embodiment 2 - Preparation of $Li_{5.395}P_{0.97}S_{4.395}Cl_{1.455}O_{0.12}$

Except for changing the conditions below, the same procedure as exemplary embodiment 1 was performed. y=0.03 to the solid electrolyte of $Li_{(xy-x-5y+7)}P_{(1-y)}S_{(xy-x-5y+6)}Cl_{x-xy}O_{4y}$, and add 0.03 mol% of $Li_3PO_4$.

## Exemplary embodiment 3 - Preparation of $Li_{5.325}P_{0.95}S_{4.325}Cl_{1.425}O_{0.20}$

Except for the conditions below, the same procedure as exemplary embodiment 1 was performed. y=0.05 to the solid electrolyte of $Li_{(xy-x-5y+7)}P_{(1-y)}S_{(xy-x-5y+6)}Cl_{x-xy}O_{4y}$, and add 0.05 mol% of $Li_3PO_4$.

## Exemplary embodiment 4 - Preparation of $Li_{5.15}P_{0.90}S_{4.15}Cl_{1.35}O_{0.40}$

Except for the conditions below, the same procedure as exemplary embodiment 1 was performed. y=0.10 to the solid electrolyte of $Li_{(xy-x-5y+7)}P_{(1-y)}S_{(xy-x-5y+6)}Cl_{x-xy}O_{4y}$, and add 0.1 mol% of $Li_3PO_4$.

## Exemplary embodiment 5 - Preparation of $Li_{4.80}P_{0.80}S_{3.80}Cl_{1.20}O_{0.80}$

Except for the conditions below, the same procedure as exemplary embodiment 1 was performed. y=0.20 to the solid electrolyte of $Li_{(xy-x-5y+7)}P_{(1-y)}S_{(xy-x-5y+6)}Cl_{x-xy}O_{4y}$, and add 0.2 mol% of $Li_3PO_4$.

## Exemplary embodiment 6 - Preparation of $Li_{4.45}P_{0.70}S_{3.45}Cl_{1.05}O_{1.2}$

Except for the conditions below, the same procedure as exemplary embodiment 1 was performed. y=0.30 to the solid electrolyte of $Li_{(xy-x-5y+7)}P_{(1-y)}S_{(xy-x-5y+6)}Cl_{x-xy}O_{4y}$, and add 0.3 mol% of $Li_3PO_4$.

The following Table 1 evaluates the electrochemical evaluation and moisture stability of Comparative Examples 1 and 2 and exemplary embodiments 1 to 6. The electrochemical evaluation is an ion conductivity evaluation at 30 °C and 0.1 C. Specifically, electrochemical evaluation of solid electrolytes for the Comparative Examples 1 and 2 and exemplary embodiments 1 to 6 was performed using a pressed-cell. After an electrolyte was added, the high-density was made high at 300 MPa. Afterwards, the cell was fastened at a pressure of 70 MPa using a SUS electrode, and the impedance was measured by applying 10 mV at 25 °C. The impedance refers to measuring ion conductivity.

To evaluate the moisture stability, 2 g of solid electrolyte in powder form was left in a dry room with a dew point of about -40 °C for about 12 hours. Afterwards, it was recovered and the impedance, for example, ion conductivity was measured.

The at% ratio of sulfur to phosphorus can be confirmed through the EDS component mapping result. The reduction rate specifically means ((ion conductivity after exposing to the atmosphere - ion conductivity before exposing to the atmosphere)/(ion conductivity before exposing to the atmosphere)) $\times$ 100[%].

(Table 1)

| | Composition | S/P at% | Amount of $Li_3PO_4$ [mol] | Ion conductivity [mS/cm] | | Reduction rate [%] |
| --- | --- | --- | --- | --- | --- | --- |
| | | | | before atmosphere expose | after atmosphere expose | |
| Comparative Example 1 | $Li_6PS_5Cl$ | - | - | 3.1 | 1.8 | 42 |
| Comparative Example 2 | $Li_{5.5}PS_{4.5}Cl_{1.5}$ | 4.10 | - | 9.5 | 5.9 | 38 |

(continued)

| | Composition | S/P at% | Amount of $Li_3PO_4$ [mol] | Ion conductivity [mS/cm] | | Reduction rate [%] |
|---|---|---|---|---|---|---|
| | | | | before atmosphere expose | after atmosphere expose | |
| exemplary embodiment 1 | $Li_{5.465}P_{0.99}S_{4.465}Cl_{1.485}O_{0.04}$ | 4.05 | 0.01 | 8.5 | 6.5 | 24 |
| exemplary embodiment 2 | $Li_{5.395}P_{0.97}S_{4.395}Cl_{1.455}O_{0.12}$ | 3.99 | 0.03 | 7.9 | 5.9 | 25 |
| exemplary embodiment 3 | $Li_{5.325}P_{0.95}S_{4.325}Cl_{1.425}O_{0.20}$ | 3.95 | 0.05 | 6.5 | 4.7 | 28 |
| exemplary embodiment 4 | $Li_{5.15}P_{0.90}S_{4.15}Cl_{1.35}O_{0.40}$ | 3.82 | 0.1 | 5.3 | 4.1 | 23 |
| exemplary embodiment 5 | $Li_{4.80}P_{0.80}S_{3.80}Cl_{1.20}O_{0.80}$ | 3.73 | 0.2 | 4.4 | 3.5 | 20 |
| exemplary embodiment 6 | $Li_{4.45}P_{0.70}S_{3.45}Cl_{1.05}O_{1.2}$ | 3.61 | 0.3 | 3.1 | 2.5 | 18 |

Looking at the Table 1, the solid electrolyte of the present invention may have an ion conductivity in the range of 3.1 to 9.0 mS/cm before exposure to the atmosphere. Looking at exemplary embodiments 1 to 6, it can be seen that the ion conductivity increases as the amount of $Li_3PO_4$ added increases. Specifically, in the case of ion conductivity before atmospheric exposure, it can be seen that the ion conductivity decreases as the amount of $Li_3PO_4$ added increases. Through the ion conductivity and reduction rate after exposure to the atmosphere, it can be seen that the reduction rate of ion conductivity decreases as the amount of $Li_3PO_4$ added increases. Since the reduction rate of the ion conductivity decreases, it can be seen that the atmospheric stability is excellent as the amount of $Li_3PO_4$ added increases. Because the electrical conductivity may vary depending on particle size and the electrical conductivity may change during the micronization process, an exemplary embodiment does not limit the present invention.

Specifically, the ion conductivity reduction rate of the solid electrolyte after exposure to the atmosphere may be less than 35% compared to before exposure to the atmosphere. When the solid electrolyte is prepared before and after exposure to the atmosphere, the reduction rate of the ion conductivity satisfies 35% or less, solving the problem of difficult handling in general atmosphere due to reaction with moisture. As a result, it is possible to provide a solid electrolyte with improved moisture stability without degradation of ion conductivity and cell performance.

The present invention is not limited to the embodiments and/or exemplary embodiments, but may be manufactured in a variety of different forms. In the technical field to which the present invention belongs, a person of an ordinary skill can understand that it can be implemented in another specific form without changing the technical idea or essential characteristics of the present invention. Therefore, the implementation examples and/or exemplary embodiments described above should be understood in all respects as illustrative and not limiting.

## Claims

1. An argyrodite-type solid electrolyte, wherein, at least one of the halogens is doped with oxygen.

2. The solid electrolyte of claim 1, has a composition of $Li_{(xy-x-5y+7)}P_{(1-y)}S_{(xy-x-5y+6)}Cl_{x-xy}O_{4y}$ ($1 \leq x \leq 2$, $0.01 \leq y \leq 0.3$).

3. The solid electrolyte of claim 1, Satisfies Equation 1 below.

## <Equation 1>

$$3.5 \leq [S]/[P] \leq 4.1$$

(In Equation 1, [S] and [P] mean at% of S and P, respectively)

4. The solid electrolyte of claim 1, has XRD diffraction peak values at $2\theta = 15.5\,°\pm 0.5\,°$, $2\theta = 18\,°\pm 0.5\,°$, $2\theta = 25.5\,°\pm 0.5\,°$, $2\theta = 30.2\,°\pm 0.5\,°$, and $2\theta = 32.5\,°\pm 0.5\,°$.

5. A method of preparing and argyrodite-type solid electrolyte, comprising:

    preparing a lithium raw material, a sulfur raw material, a halogen raw material, and a doping raw material;
    mixing the raw materials; and
    sintering the resultant obtained by mixing,
    wherein, the doping raw material includes oxygen.

6. The method of claim 5, wherein:
    the doping raw material contains a phosphoric acid salt.

7. The method of claim 6, wherein:
    the phosphoric acid salt contains at least one of a group consisting of $Li_3PO_4$, $Li_4SiO_4$, $Li_4GeO_4$, $Li_3BO_3$, and $Li_3AlO_3$.

8. The method of claim 7, wherein:
    in the step of preparing the raw materials, 0.01 to 0.3 mol% of the phosphoric acid salt is added, based on the solid electrolyte of 100 mol%.

9. The method of claim 5, wherein:

    the lithium raw material is $Li_2S$,
    the sulfur raw material is $P_2S_5$, and
    the halogen raw material is LiCl.

10. The method of claim 5, wherein:
    the solid electrolyte has a composition of $Li_{(xy-x-5y+7)}P_{(1-y)}S_{(xy-x-5y+6)}Cl_{x-xy}O_{4y}$ ($1 \leq x \leq 2$, $0.01 \leq y \leq 0.3$).

11. The method of claim 5, wherein:
    the solid electrolyte satisfies Equation 1:

## <Equation 1>

$$3.5 \leq [S]/[P] \leq 4.1$$

(In Equation 1, [S] and [P] mean at% of S and P, respectively)

12. A lithium secondary battery, comprising:

    a positive electrode comprising a positive active material;
    a negative electrode comprising a negative active material; and
    a solid electrolyte positioned between the positive electrode and the negative electrode,
    wherein, the solid electrolyte is an argyrodite-type in which at least one of the halogens is doped with oxygen.

13. The lithium secondary battery of claim 12, wherein:
   the solid electrolyte has a composition of $Li_{(xy-x-5y+7)}P_{(1-y)}S_{(xy-x-5y+6)}Cl_{x-xy}O_{4y}$ ($1 \leq x \leq 2$, $0.01 \leq y \leq 0.3$).

14. The lithium secondary battery of claim 12, wherein:
   the solid electrolyte satisfies Equation 1:

<Equation 1>

$$3.5 \leq [S]/[P] \leq 4.1$$

(In Equation 1, [S] and [P] mean at% of S and P, respectively)

【FIG. 1】

【FIG. 2】

| Preparing raw materials | ~S100 |

↓

| Mixing raw materials | ~S200 |

↓

| Synthesizing by heat treatment of the result obtained by mixing | ~S300 |

## INTERNATIONAL SEARCH REPORT

| International application No. |
|---|
| **PCT/KR2022/020984** |

**A. CLASSIFICATION OF SUBJECT MATTER**

**H01M 10/0562**(2010.01)i; **H01M 10/052**(2010.01)i; **H01B 1/06**(2006.01)i; **C01B 25/14**(2006.01)i

According to International Patent Classification (IPC) or to both national classification and IPC

**B. FIELDS SEARCHED**

Minimum documentation searched (classification system followed by classification symbols)

H01M 10/0562(2010.01); C03C 3/32(2006.01); H01B 1/06(2006.01); H01M 10/052(2010.01); H01M 10/058(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고체 전해질(solid electrolyte), 할로겐(halogen), 산소(oxygen), 도핑(doping), 아지로다이트(argyrodite), X선 회절(X-ray diffraction), 인산(phosphoric acid), 전지(battery)

**C. DOCUMENTS CONSIDERED TO BE RELEVANT**

| Category* | Citation of document, with indication, where appropriate, of the relevant passages | Relevant to claim No. |
|---|---|---|
| X<br><br>A | SUN, Zhen et al. Insights on the properties of the O-doped argyrodite sulfide solid electrolytes (Li6PS5–xClOx, x=0-1). ACS Applied Materials & Interfaces. 15 November 2021 (publication date), vol. 13, pp. 54924-54935.<br>See abstract; and page 54925, left column, lines 25-44 and page 54925, left column, line 62 - right column, line 8. | 5,9,11<br><br>1-4,6-8,10,12-14 |
| A | CN 106848391 A (ZHENGZHOU NEW CENTURY MATERIAL GENOMICS ENGINEERING RESEARCH INSTITUTE CO., LTD.) 13 June 2017 (2017-06-13)<br>See paragraph [0002]; and claims 1 and 8. | 1-14 |
| A | KR 10-2021-0057175 A (BLUE CURRENT, INC.) 20 May 2021 (2021-05-20)<br>See claims 1-19. | 1-14 |
| A | WO 2021-251347 A1 (MITSUI MINING & SMELTING CO., LTD.) 16 December 2021 (2021-12-16)<br>See claims 1-7. | 1-14 |

☑ Further documents are listed in the continuation of Box C.　　☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **28 March 2023** | **29 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2022/020984** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2020-114787 A (TOYOTA MOTOR CORP.) 30 July 2020 (2020-07-30)<br>    See claims 1-5. | 1-14 |

Form PCT/ISA/210 (second sheet) (July 2022)

## INTERNATIONAL SEARCH REPORT
### Information on patent family members

International application No.

**PCT/KR2022/020984**

| Patent document cited in search report | | | Publication date (day/month/year) | Patent family member(s) | | | Publication date (day/month/year) |
|---|---|---|---|---|---|---|---|
| CN | 106848391 | A | 13 June 2017 | None | | | |
| KR | 10-2021-0057175 | A | 20 May 2021 | CN | 113365945 | A | 07 September 2021 |
| | | | | EP | 3837215 | A1 | 23 June 2021 |
| | | | | JP | 2022-501296 | A | 06 January 2022 |
| | | | | US | 2020-0087155 | A1 | 19 March 2020 |
| | | | | WO | 2020-061354 | A1 | 26 March 2020 |
| WO | 2021-251347 | A1 | 16 December 2021 | CN | 115516576 | A | 23 December 2022 |
| | | | | KR | 10-2023-0022158 | A | 14 February 2023 |
| | | | | TW | 202204263 | A | 01 February 2022 |
| | | | | WO | 2021-251347 | A1 | 16 December 2021 |
| JP | 2020-114787 | A | 30 July 2020 | CN | 111446492 | A | 24 July 2020 |
| | | | | JP | 7196625 | B2 | 27 December 2022 |
| | | | | US | 11444320 | B2 | 13 September 2022 |
| | | | | US | 11489196 | B2 | 01 November 2022 |
| | | | | US | 2020-0235423 | A1 | 23 July 2020 |

Form PCT/ISA/210 (patent family annex) (July 2022)